# EUROPEAN PATENT APPLICATION

(11) **EP 3 351 514 A1**
(43) Date of publication of application: **25.07.2018**
(21) Application number: 16845733.1
(22) Date of filing: 14.09.2016
(51) Int. Cl.: C02F 1/72, C02F 1/46

(54) **WASTEWATER TREATMENT PROCESS USING ELECTROCHEMICAL ELECTRODE DEVICE**

(30) Priority: 14.09.2015 CN 201510600655
(71) Applicant: Li, Yanbo, Beijing 100022 (CN)
(72) Inventor: Li, Yanbo, Beijing 100022 (CN)
(74) Representative: AWA Sweden AB
(86) International application number: PCT/CN2016/099063
(87) International publication number: WO 2017/045619

(57) **Abstract**

The invention provides a wastewater treatment process by an electrochemical apparatus in which the apparatus comprises at least one electrochemical cell having suitable electrode plates. The process comprises passing wastewater containing undesirable solutes through at least one electrochemical cell to which a DC electrical current is applied to destroy the undesirable solutes in the wastewater so as to produce water having a lower concentration of the undesirable solutes, wherein the DC current applied to the electrochemical cell comprises at least a constant current stage wherein the constant current is modified by a factor calculated during a previous DC power cycle.

## Description

### TECHNICAL FIELD

The present invention relates to a method for the treatment of contaminated feedwaters which achieves almost total destruction of undesirable solutes present in water, such undesirable solutes being organic or inorganic in nature, thereby producing a product water containing low, or very low, concentrations of such solutes.

### BACKGROUND OF THE INVENTION

The presence of toxic organic chemicals in the environment is becoming a concern in particular with respect to the possible effect on human health. A particular category of water treatment process, called advanced oxidation processes (AOP), have become influential in the removal of toxic organic and toxic inorganic contaminants from wastewater, treated drinking water, treated municipal sewage, and contaminated groundwaters. A subset of the available AOPs are referred to as electrochemical advanced oxidation processes (EAOP).

### SUMMARY OF THE INVENTION

The present invention provides a method of controlling the way in which electrical power is supplied to an electrochemical cell used in an electrochemical advanced oxidation process in order to improve the performance of the process and make it significantly more cost-effective.

In particular, the present invention provides a process for the treatment of a feedwater stream in an electrochemical apparatus, wherein the electrochemical apparatus comprises one or more electrochemical cells containing electrodes, in order to produce wastewater with low concentrations of desirable solutes. The process comprises (a) providing a feedwater stream which comprised of wastewater containing the undesirable solutes therein, said solutes comprising organic species or molecules, ammoniacal nitrogen, organic nitrogen, inorganic sulfides, organic sulfides, or compounds containing carbon-nitrogen (CN) group; (b) passing the feedwater from step (a) through the electrochemical cell so that the wastewater contacts the electrodes contained therein; (c) causing a direct electrical current to flow through the electrochemical cell in order to destroy the undesirable solutes, wherein a product water stream having a lower concentration of the undesirable solutes is produced, wherein the direct electrical current is varied and controlled in order to apply a power scheme to the electrochemical cell, said power scheme which comprising at least one period of operation with a constant current flowing through the cell during which the potential difference across the cell is compared with certain required values in order to calculate a modification factor which is used to modify the current caused to flow through the cell in a subsequent period of constant current operation; and (d) either returning the wastewater passed through at least one of the electrochemical cells to the inlet of the electrochemical cell, forwarding the partially treated wastewater to the inlet of a second electrochemical cell to which power is applied as stated step (c), in order to effect a continuing treatment of the wastewater to successively destroy the undesirable solutes present in the wastewater; or making use of the two methods.

The process of the invention includes varying and controlling the direct electrical current comprising using at least one instance of the following applied power sequences: (i) a period of operation with a selected constant current flowing through the electrochemical cell; (ii) a further period of operation being a constant current flowing through the electrochemical cell, the value of the constant current any value between zero and the value selected in step (i); (iii) reversing the direction of the current passing through the electrochemical cell while maintaining the absolute magnitude of the current constant; and (iv) a period of operation with a constant current flowing through the electrochemical cell during which the potential difference across the cell at particular points in the period of constant current operation is compared with certain required values, wherein after such comparison is performed, calculating a modification factor to be applied to the constant current flowing through the cell during step (iv) in a subsequent cycle of the power sequence.

The process of the invention further optionally may include preconditioning of the feedwater, comprising (i) injecting an oxidant into the feedwater stream in order to increase the concentration of molecular oxygen dissolved in the feedwater; (ii) dosing a chemical into the feedwater stream in conjunction with the use of a catalyst in order to increase the concentration of molecular oxygen dissolved in the feedwater; and (iii) increasing the concentration of molecular oxygen dissolved in the feedwater by a combination of (i) and (ii).

In accordance with the invention, the electrochemical cell contains electrodes manufactured from boron doped diamond (BDD) or electrodes on which the onset of oxygen evolution occurs at an anodic potential of greater than 2.0 volts versus standard hydrogen electrode (SHE).

In accordance with the invention, the feedwater stream is a product from a water treatment plant supplying drinking water, a municipal wastewater treatment plant, or from contaminated groundwater.

The advantages of the present invention is that on an overall cost of ownership basis, the inventive process: (a) is cheaper to own and operate than other water treatment systems capable of removing or destroying undesirable solutes; (2) is reliably capable of producing treated water with very low concentrations of most if not all organic compounds dissolved in the feedwater stream; (3) is reliably capable of producing treated water with very low concentrations of ammoniacal nitrogen; and (4) will produce treated water with very low levels of certain inorganic solutes such as sulfides and cyanides.

Further, the process of the present invention provides that the one or more electrochemical cells are operated so as to ensure that there is an abundant population of hydroxyl radicals generated under all conditions.

Still further, the process of the present invention does not require "close control", and accordingly it is easily able to cope with variability of the feedwater.

Further still, the process of the present invention is extremely efficient and the energy required is much lower than other electrochemical oxidation processes with comparable capability.

### BRIEF DESCRIPTION OF THE DRAWINGS

A fuller understanding of the invention can be gained from the following description when read in conjunction with the accompanying figures, where like reference numerals refer to identical or functionally similar elements throughout the separate views, which illustrate some, but not the only and exclusive, examples of embodiments of the invention and, as such, the figures disclosed herein are to be considered illustrative rather than limiting. In the drawings:
**FIG. 1** illustrates a generalized process flow diagram for employing the water oxidation process of the invention in a variety of applications and with a variety of feedwaters;
**FIG. 2** illustrates the profile of the power applied to the electrochemical cell utilized in the process of the invention; and
**FIG. 3** illustrates a generalized flow diagram of an alternative way of employing the wastewater oxidation process of the invention in a variety of applications and with a variety of feedwaters.

### DETAILED DESCRIPTION OF THE INVENTION

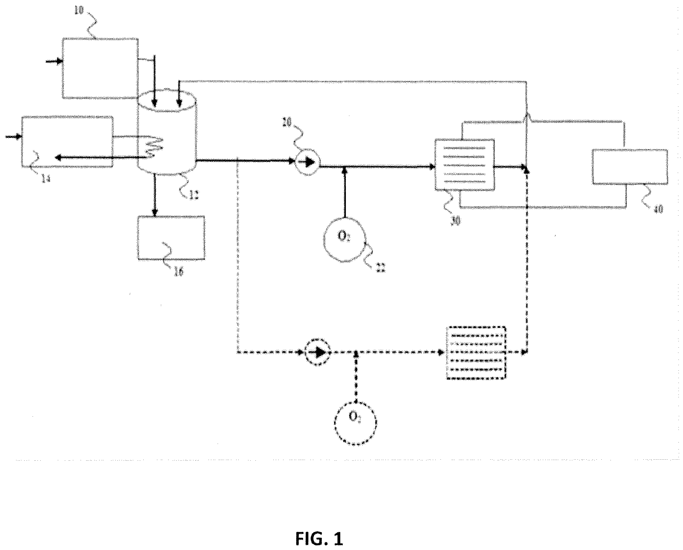

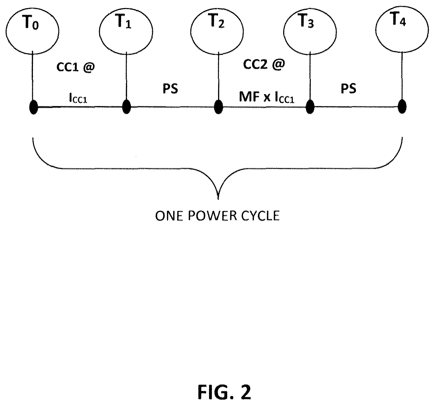

Referring now to FIG. 1, a generalized flow schematic illustrates one use of the water oxidation process of the invention in industry. The feedwater **10** containing the undesirable solutes is provided to the storage tank **12.** The feedwater is then routed to the inlet of a pump **20** and then to the inlet of the electrochemical cell **30**. Before the water reaches the inlet of the electrochemical cell oxygen gas **22** is injected in order to increase the concentration of dissolved oxygen in the water. The electrochemical cell **30** contains at least two electrodes manufactured from boron doped diamond, BDD, arranged such that the feedwater can flow between the electrodes and contact both electrodes. More normally the electrochemical cell will contain several pairs of BDD electrodes arranged to form parallel flow paths through the unit. A power supply **40** is connected to the electrochemical cell and an electric current controlled in accordance with the required power profile shown in **FIG 2** is caused to pass through the electrodes and the feedwater. After exiting the electrochemical cell, the partially treated water is returned to the storage tank **12**. The partially treated feedwater is then re-circulated through the electrochemical cell several times until the concentration of the undesirable solutes is reduced to a required value at which time the pump and electrochemical cell are de-energized and the contents of the storage tank sent to discharge **16**. The rate at which the undesirable solutes are destroyed can be increased by adding more electrochemical cells to the system. The addition of a second electrochemical cell to the system is indicated by the dotted lines. As the water is continually circulated through the electrical cell the water is heated. Cooling water **14** is provided to a heat exchanger in the storage tank to remove the heat and maintain the temperature of the water relatively constant.

FIG **2** is a schematic representation of the sequence of the power applied to the electrochemical cell in one embodiment of my invention. The applied power sequence is shown in FIG 2, the essential features of the applied power sequence can be described as:
CC1: Between time T₀ and time T₁ a constant direct current (CC1) is caused to flow through the electrochemical cell. The value of the current supplied to the cell, I_{CC1} can be determined by any one of a number of ways commonly known by those of ordinary skill in the art, or can be an educated estimate.
   Polarity Reversal (PS): following period CC1 at time T₁ the direction of the current flowing through the electrochemical cell is reversed.
CC2: Between time T₂ and time T₃ a constant direct current 2 (CC2) is caused to flow through the electrochemical cell. The value of the current supplied to the cell is equal to MF x Icci, where MF is a modification factor calculated by comparing the measured potential difference across the cell during CC2 in the immediately previous power sequence cycle with specified required values consistent with the production of hydroxyl radicals as commonly known by those of ordinary skill in the art.
   Polarity Reversal: following period CC2 at time T₃ the direction of the current flowing through the electrochemical cell is reversed.

After the second current reversal period the applied power sequence is repeated. The applied power sequence is repeated for as many times as necessary in order to effect the required reduction of the undesirable solutes.

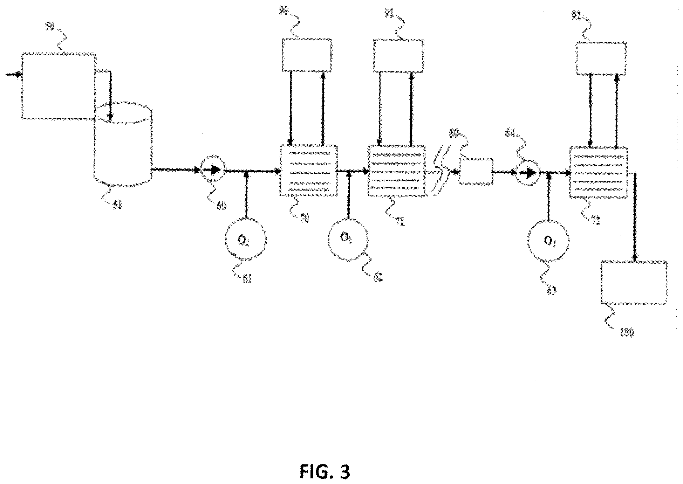

In **FIG. 3**, a generalized flow schematic illustrates an alternative use of my novel water oxidation process in industry. A feedwater **50** containing the undesirable solutes is sent to a feed tank **51**. The feedwater is then forwarded by a pump, **60**, to the inlet of an electrochemical cell **70**. At the pump outlet oxygen gas **61** is injected into the water to cause the concentration of oxygen dissolved in the water to be increased. The electrochemical cell **70** contains at least two electrodes manufactured from boron doped diamond (BDD) arranged such that the feedwater can flow between the electrodes and contact both electrodes. More normally the electrochemical cell will contain several pairs of BDD electrodes arranged to form parallel flow paths through the unit. A power supply **90** is connected to the electrochemical cell and an electrical current controlled to the profile shown in **FIG. 2** is caused to pass through the electrodes and the feedwater. After exiting the electrochemical cell, the partially treated water is dosed with oxygen gas to ensure that the concentration of dissolved oxygen in the water is sufficient and is sent to the inlet of another electrochemical cell **71.** The electrochemical cell **71** is similar to the electrochemical cell **70** and is connected to a power supply **91** which is controlled in exactly the same manner as power supply **90**. After exiting the second electrochemical cell the feedwater is subjected to treatment in subsequent similar electrochemical cells **72** until the concentration of the undesirable solutes is reduced to a value that allows the water to be discharged from the system, **100.** The electrochemical cell **72** is similar to the electrochemical cell **70** and is connected to a power supply **92** which is controlled in exactly the same manner as power supply **90.** Additional oxygen dosing **63** and pumps **64** are installed as required to maintain the concentration of dissolved oxygen and maintain the required flow through the system. As the feedwater passes through each electrochemical cell its temperature increases. At some point in the system a heat exchanger **80** is required to reduce the temperature.

It will be appreciated by those skilled in the art that changes could be made to the embodiments described above without departing from the broad inventive concept thereof. It is understood, therefore, that this invention is not limited to the particular embodiments disclosed, but it is intended to cover modifications that are within the spirit and scope of the invention, as defined by the appended claims.

## Claims

1. A process for treatment of a feedwater stream in an electrochemical apparatus, said electrochemical apparatus comprising of one or more electrochemical cells containing suitable electrodes to produce water with low concentrations of undesirable solutes, said process comprising:
(a) providing a feedwater stream comprised of wastewater containing the undesirable solutes therein, said solutes comprising organic species or molecules, ammoniacal nitrogen, organic nitrogen, inorganic sulfides, organic sulfides, or compounds containing a carbon-nitrogen (CN) group;
(b) passing the feedwater from step(a) through the electrochemical cell so that the wastewater contacts the electrodes contained therein;
(c) causing a direct electrical current to flow through the electrochemical cell in order to destroy the undesirable solutes, wherein a product water stream having a lower concentration of the undesirable solutes is produced, wherein the direct electrical current is varied and controlled in order to apply a power scheme to the electrochemical cell, said power scheme comprising at least one period of operation with a constant current flowing through the cell during which the potential difference across the cell is compared with a previous value in order to calculate a modification factor which is used to modify the current caused to flow through the cell in a subsequent period of constant current operation; and
(d) either returning the waste water passed through the electrochemical cell to the inlet of the electrochemical cell, forwarding the partially treated wastewater to the inlet of a second electrochemical cell to which power is applied as stated (c), in order to effect a continuing treatment of the wastewater to successively destroy the undesirable solutes present in the wastewater; or making use of both methods.

2. The process of claim 1, wherein at step (a), the direct electrical current to be varied and controlled comprises at least one instance of the following applied power sequence:
(i) a period of operation with a selected constant current flowing through the electrochemical cell;
(ii) a further period of operation with a constant current flowing through the electrochemical cell, the value of the constant current being any value between zero and the value selected in step (i);
(iii) reversing the direction of the current passing through the electrochemical cell while maintaining absolute magnitude of the current constant; and
(iv) a period of operation with a constant current flowing through the electrochemical cell during which the potential difference across the cell at particular points in the period of constant current operation is compared with certain required values, wherein after such comparison is performed, calculating a modification factor to be applied to the constant current flowing through the cell in a similar step (iv) in a subsequent cycle of the power sequence.

3. The process of claim 1, wherein between step (a) and step (b) there is a preconditioning of the feedwater, comprising:
(i) injecting an oxidant into the feedwater stream in order to increase the concentration of molecular oxygen dissolved in the feedwater;
(ii) dosing a chemical into the feedwater stream in conjunction with use of a catalyst in order to increase concentration of molecular oxygen dissolved in the feedwater; and
(iii) increasing concentration of molecular oxygen dissolved in the feedwater by a combination of (i) and (ii);

4. The process of claim **1,** wherein the electrochemical cell contains electrodes manufactured from boron doped diamond or electrodes on which the onset of oxygen evolution occurs at an anodic potential of greater than 2.0 volts versus standard hydrogen electrode (SHE).

5. The process of claim **1,** wherein the feedwater stream is a product from a water treatment plant supplying drinking water

6. The process of claim **1,** wherein the feedwater stream is a product from a municipal wastewater treatment plant.

7. The process of claim **1,** wherein the feedwater stream is contaminated groundwater.
